# EUROPEAN PATENT SPECIFICATION

(11) **EP 0 563 018 B1**
(45) Date of publication and mention of the grant of the patent: **19.02.1997**
(21) Application number: 93830117.3
(22) Date of filing: 25.03.1993
(51) Int. Cl.: F16B 11/00, E06B 3/96, B21D 53/74

(54) **Equipment for the joining of sections converging at a corner of a metal frame, with gluing between the sections and the internal bracket**
Einrichtung für die Verbindung von Profilen, die an der Ecke eines Metallrahmens zusammenkommen, mit Leimverbindung zwischen den Profilen und der inneren Halterung
Equipment pour la connexion des sections convergentes au coin d'un cadre en metal, avec collage entre les sections et le support intérior

(30) Priority: 26.03.1992 IT FI920076
(43) Date of publication of application: 29.09.1993
(73) Proprietor: ATLA COOP. Soc. Coop. a r.l., I-50037 San Piero a Sieve (Firenze) (IT)
(72) Inventor: Bruno, Angelo, I-40141 Bologna (IT); Conti, Giovanni, I-50041 Calenzano, Firenze (IT); Parigi, Stefano, I-50041 Calenzano, Firenze (IT); Santini, Paolo, I-50041 Calenzano, Firenze (IT); Meucci, Sergio, I-50013 Campi Bisenzio, Firenze (IT)
(74) Representative: Mannucci, Gianfranco, Dott.-Ing.

(56) References cited:
- WO-A-87/00884
- DE-A- 2 510 884
- DE-A- 2 522 523
- GB-A- 1 259 917

## Description

The invention relates to the technique for the formation of metal frames, using sections which are usually mitred, converge at the corners, and are connected there by means of brackets housed within the sections. The connection is made by joints using a shape fit provided by the chamfering of the walls - most commonly the external walls - of the sections to provide deformations with perforations if necessary, and to create areas which bear against the shoulders of the bracket. More or less automated equipment exists to execute these joints.

The use of an adhesive to enhance the mechanical connection is also common. The glue is most commonly distributed by hand on the bracket before it is inserted into the sections; the operation is consequently laborious and the effectiveness of the gluing cannot always be relied upon. Document WO-A-8700984 provides a method and an equipment for providing a chamfered and glued joint, wherein the liquid adhesive is injected between the bracket and the sections after the positioning of the components (and after chamfering if necessary). The injection is executed by pressure through a hole made in one section or in each section, or made between the two sections.

The object of the invention is an equipment for the joining of sections converging at a corner with the aid of an internal bracket, for the formation of metal frames and the like.

The equipment according to the invention is of the type comprising - at a substantially horizontal seat for the components of the frame that are to be assembled - chamfering devices capable of deforming an external wall of each section to bear against a corresponding stop on the bracket, at least one drilling device and at least one device for injecting through the said hole a liquid adhesive capable of securing the fastening between the bracket and the sections. According to the invention, the element for carrying the drilling and injection devices is movable at right angles with respect to said seat to bring first the drilling device or devices and then the adhesive injection device or devices into the operating position. Furthermore, on said element two said drilling devices and two corresponding said injection devices are disposed symmetrically about the plane bisecting the corner of the frame being constructed and capable of acting on the external sides of the two sections next to the arms of the bracket.

A guide system orthogonal to the bisecting plane may be provided on the said element, to move symmetrically in and out two sliding supports, each of which carries a drilling device and an injection device.

The said guide system may be carried in turn by a sliding block which is movable on the said element to approach and move away from the location for the components to be assembled.

The invention will be more clearly understood from the description and the attached drawing, which shows practical and non-restrictive examples of the invention. In the drawing,
Fig. 1 is a view and partial section, substantially from the line I-I in Fig. 2 in a substantially frontal direction, of an embodiment of the equipment;
Fig. 2 is a vertical section through II-II in Fig. 1;
Fig. 3 is a plan view and partial horizontal section through III-III in Fig. 1;
Fig. 4 is another plan view and partial section through the line IV-IV in Fig. 1;
Figs. 5 and 6 are detail sections substantially through lines V-V and VI-VI in Fig. 3.

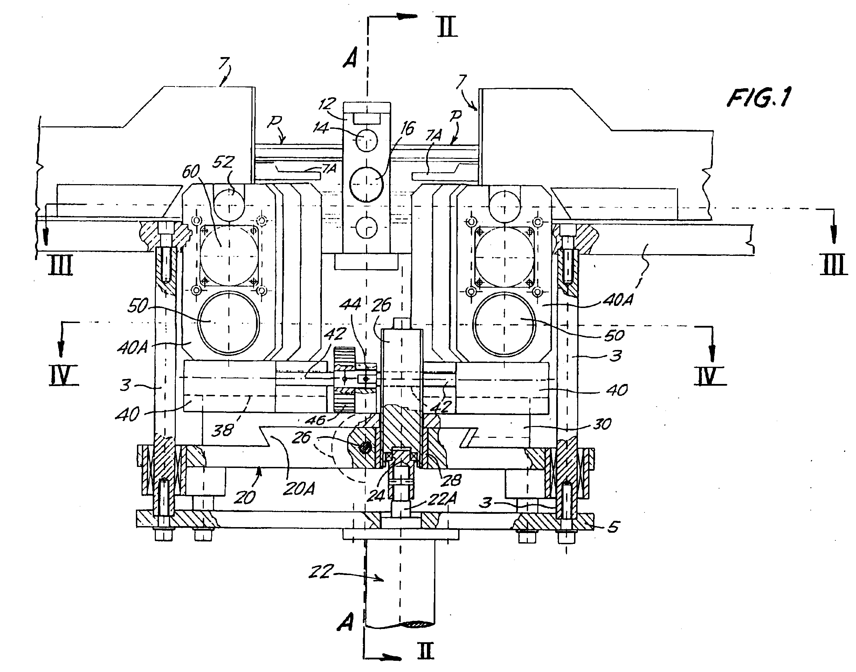

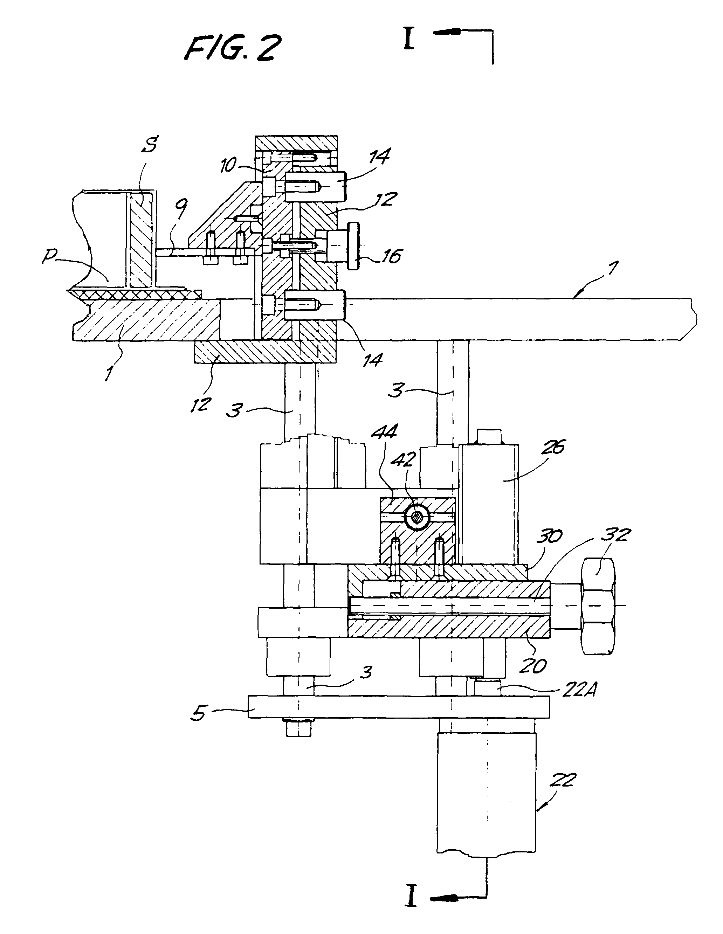

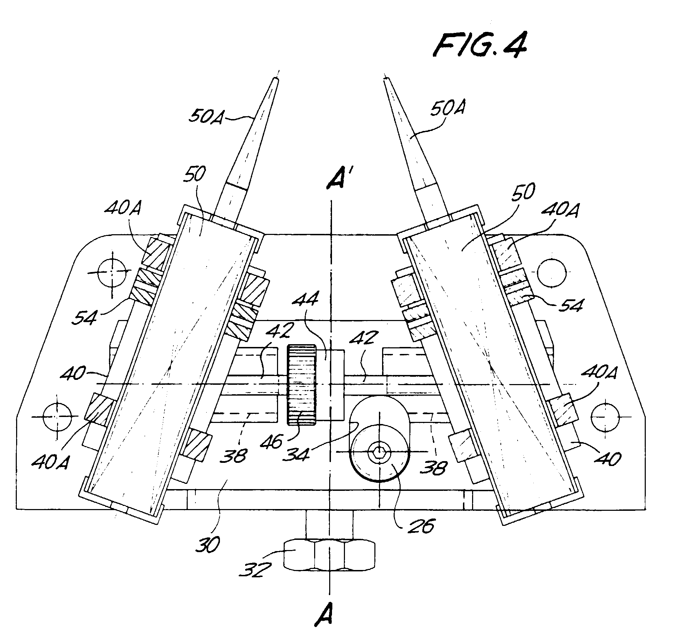

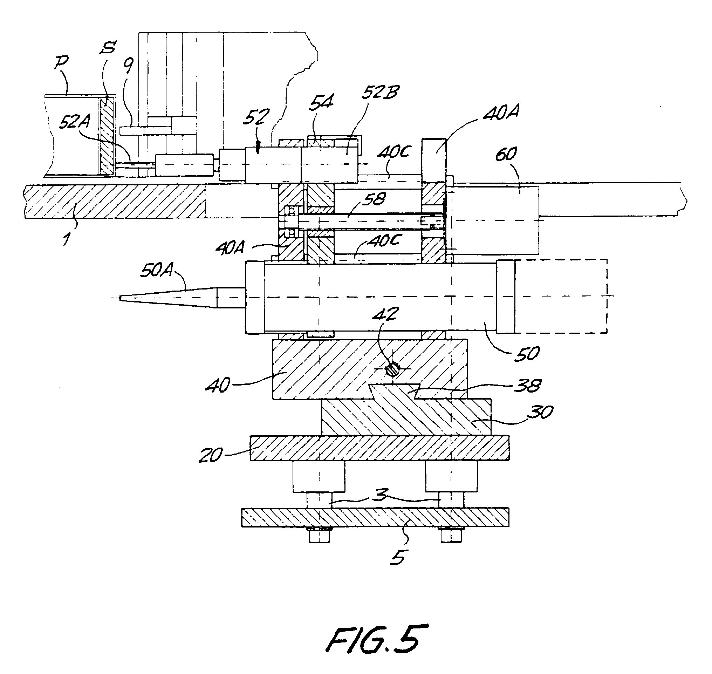

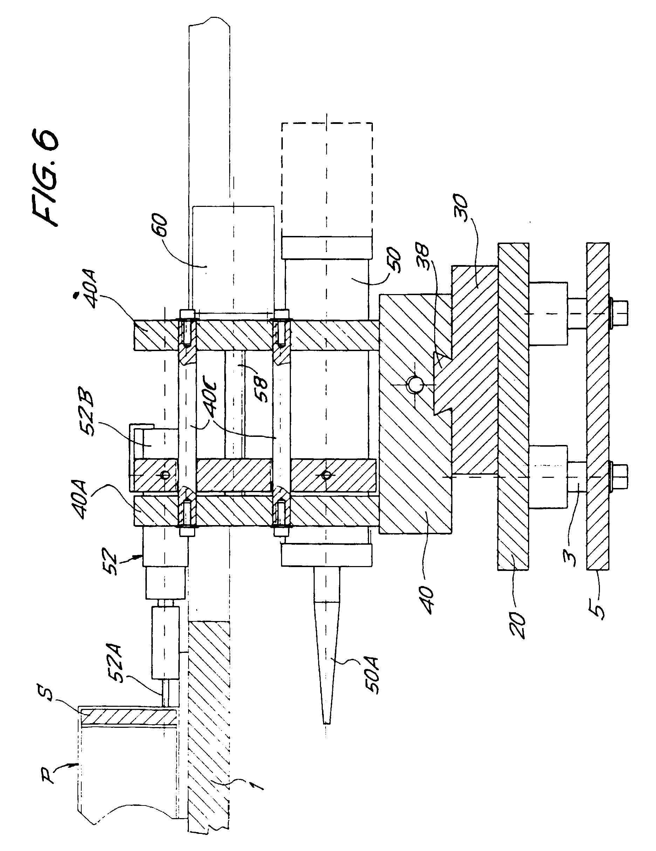

According to the illustrations in the attached drawing; Figs. 1 to 6 show an embodiment in which a pair of chamfering devices of a known type and a pair of devices for injecting an adhesive are provided. In this example, 1 indicates the base structure for the support of the sections P which converge at the corner to be formed and are to be connected by means of a bracket S. The flat member 1 forms part of a structure which also comprises vertical guides 3 connected below by a horizontal plate 5.

On the structure 1 there are provided two chamfering devices indicated in a general way by 7 and disposed symmetrically about a bisecting plane which coincides with the plane of joining of the mitred surfaces of the two sections B for the formation of the corner of the frame with the aid of the bracket S; 7A indicates the chamfering tools which act on the external surfaces of the sections P to cause their deformation or possibly their perforation in order to ensure the fastening of the bracket S by the bearing of the deformed parts of the sections P against shoulders formed by the bracket S and corresponding to the deformations which form supporting and force-fitting catches and which are produced by the chamfering tools 7A. The positions of these devices 7 may be adjusted, by a method known in these machines, according to the types of bracket which may be used on different occasions by the user. With a known arrangement, a replaceable bracket or fork 9, whose position is adjustable by means of a plate 10 and a support 12 which forms guides for pins 14 which may be inserted in slides which are also formed by the support 12, is provided immediately above the supporting plane formed by the structure 1; 16 indicates a knob for the engagement by screwing of the replaceable bracket or fork assembly 9, 10; the bracket or fork 9 is used to determine the position of the sections P converging at the corner to be formed and engaging with the connecting bracket S to form the frame.

According to the invention and according to the example illustrated in Figs. 1 to 6, a vertically slidable and driven element 20 is mounted on the vertical guides 3 so that it can reach two predetermined positions along the guides 3 by means of a cylinder and piston system 22, the end of whose rod 22A is engaged rotatably at 24 with a vertical adjusting screw 26 whose thread is engaged with a bush 28 which is integral with the said element 20; by adjusting the screw 26 with a spanner, the two positions of the element 20 are adjusted with respect to the guides 3, whose positions are reached by the action of the cylinder and piston system 22, 22A with a fixed spacing between the said two positions; this spacing corresponds to the centre spacing between the drilling device and the injection device in each of the two pairs of devices which are provided on the element 20; by means of the adjustment obtained with the screw 26 and the bush 28 it is possible to adjust the active positions of the two drilling and injection devices which are carried by the said element 20 in the way indicated below, in such a way as to match the two positions to the shape and dimensional characteristics of the sections P of the frame to be formed in any desired way.

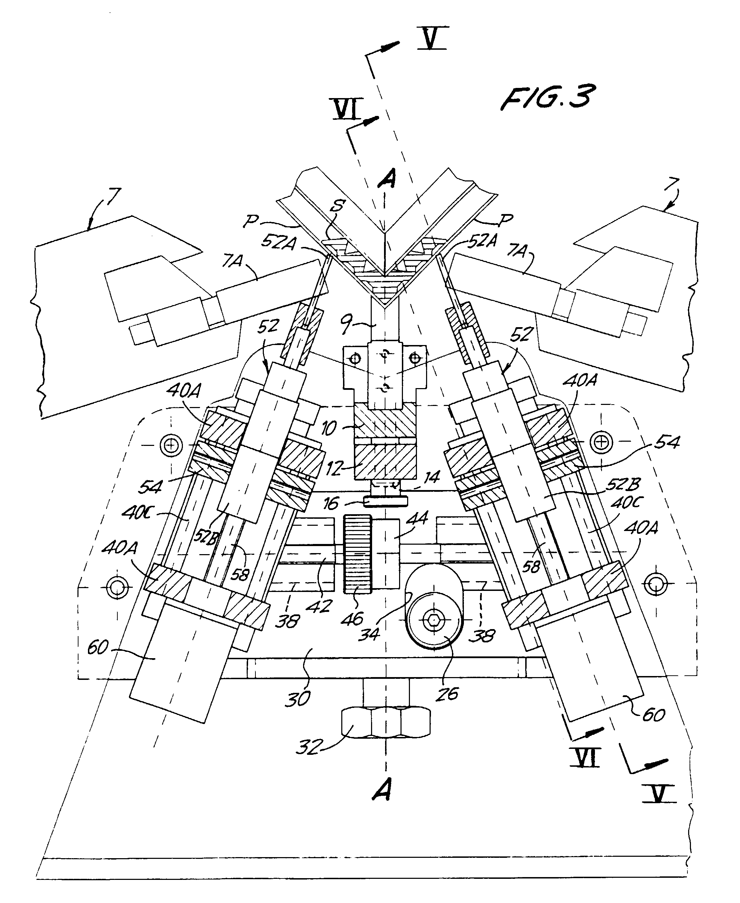

The element 20 forms a dovetailed sliding guide 20A which is orientated parallel to the plane bisecting the corner to be formed with the sections P, this bisecting plane corresponding to the plane of the section II-II in Fig. 1 and to the plane A-A indicated also in Fig. 3. A sliding block 30, which can slide along the guides 20A and consequently in the said bisecting plane and whose position may be adjusted by means of a screw knob 32, is fitted on the guides 20A of the element 20. The sliding block 30 has an elongated slot which permits the passage of the adjusting screw 26 for the vertical adjustment of the element 20 and the displacement of the sliding block 30 in the said bisecting plane passing through A-A.

In turn, the sliding block 30 has dovetailed guides 38 which are orthogonal to the bisecting plane passing through A-A and which are disposed symmetrically about the said plane and aligned with each other. A support 40 is slidable on each of the said guides 38 and its position may be adjusted; the two supports 40 are inclined symmetrically about the plane passing through A-A so that they may be orientated in directions converging on the fork 9, the sections P to be joined and the bracket S for connecting the said sections. A double-threaded rod 42 is engaged in corresponding threaded holes in the two supports 40; the said rod 42, whose axis is orthogonal to the plane passing through A-A and therefore parallel to the direction of the two guides 38, is engaged rotatably but with axial restraint with a lug 44 carried by the sliding block 30. By means of a knurled disc 46 integral with the double-threaded rod 42, it is possible to manoeuvre the said rod and thereby adjust the positions of the two supports 40 symmetrically along the guides 38, in such a way as to keep the supports symmetrical about the bisecting plane passing through A-A.

Each of the supports 40, which may be adjusted along the corresponding guides 38, has two vertical plates 40A which in their lower parts form sliding housings for an injection cartridge 50 intended by means of its nozzle 50a to supply at the correct time a specified quantity of adhesive for the purposes stated below. The plates 40A also form sliding housings for a tool 52 with a drill bit 52A and with a pneumatic motor 52B for the rotation of the said bit 52A. In each support 40, 40A the devices 50 and 52 are carried by a vertical plate 54 which is slidably supported and guided by cylindrical guides 40C which extend between the two plates 40A and are parallel to the axes of the device 52 and of the cartridge 50. The plate 54 and consequently the device 52 and the cartridge 50 are movable along the guides 40C by means of a threaded rod 58 engaged in a bush of the plate 54 and caused to rotate by a step-by-step motor 60 carried by one of the plates 40A. By means of the activation of the motor 60, therefore, it is possible to advance and withdraw both the bit 52A of the drilling device 52 and the nozzle 50A of the adhesive injection cartridge 50, in an adjustable way and in particular with adjustable speed, to predetermined positions which are also adjustable. This disposition is provided in each of the two symmetrical supports 40, 40A which are adjustable to advance and withdraw, while remaining constantly parallel to themselves, by means of the threaded rod 42 which drives them simultaneously and symmetrically. The devices 50, 52 of the two said pairs are then adjustable in the direction of the bisecting plane passing through A-A by means of the movement of the sliding block 30 and are movable to two alternative positions in the vertical direction by the cylinder and piston system 22, the two positions being the operating positions of the drill bit 52A (of the device 52) and of the nozzle 50A (of the injection cartridge 50) respectively. These operating positions are adjustable by means of the adjusting screw 26 which changes the relative position of the end of the rod 22A of the cylinder and piston system 22, 22A with respect to the element 20 in which the screw 26 is engaged. With this disposition, therefore, it is possible to move the two assemblies 52, 52A and 50, 50A into the operating positions alternately; to advance or withdraw the working ends of the components 52A and 50A with respect to the sections P and to the bracket S carried by the flat member 1 of the fixed structure and positioned by the bracket or fork 9; and to provide an adjustment of the relative positions of the two supports 40, 40A carrying the two pairs of devices, in accordance with the position in which the drilling by the bits 52A and the injection of adhesive by the cartridges 50, 50A are to be executed. All this may be done independently of the adjustment which may be made (in a known way) for the tools 7A used to chamfer and consequently to deform the sections P for the mechanical joining with the bracket S.

The operating positions of the drills and of the injectors are preferably displaced from the positions of the chamfering tools. By withdrawing the tools 7A, it is possible to use the drills and injectors even at points not remote from the chamfering areas.

With this equipment, a hole is made with the corresponding bit 52A of the device 52, and adhesive is then injected by means of the nozzle 50A of the corresponding cartridge 50, at a predetermined position along each of the two converging sections P, after the whole element 20 has been raised by the cylinder and piston 22 from the lowered position, corresponding to the position of drilling with the bits 52A, to the raised position corresponding to the injection of the adhesive by means of the nozzle 50A into the corresponding hole formed by the appropriate bit 52A. The advance and withdrawal of the bit 52A and the nozzle 50A are executed by the motor 60 which is a step-by-step motor to establish the exact position of deceleration and subsequently of halting of the advance for drilling and for injection respectively, while the drill bit 52A is driven by its own motor 52B which for'example may be a pneumatic motor activated at the correct time. The nozzle 50A is activated by an appropriate actuator which for example may be pneumatic, with a suitable program.

It is thus possible to execute - preferably before, but possibly after, the chamfering with the tools 7A and therefore before or after the mechanical joining - the drilling of the external walls of the two sections P converging at the corner to be formed, and then to execute an injection of the adhesive with the cartridges 50, so as to fill with the adhesive the interstices between the sections P and the bracket S and thus to fasten these three components as a result of the setting of the adhesive.

## Claims

1. Equipment for the joining of sections converging at a corner with the aid of an internal bracket, for the formation of metal frames and the like, comprising - at a substantially horizontal seat for the components of the frame that are to be fastened - chamfering devices (7, 7A) capable of deforming an external wall of each section to bear against a corresponding stop on the bracket, at least one drilling device (52, 52A) and at least one device (50, 50A) for injecting a liquid adhesive capable of securing the fastening between the bracket and the sections, characterised: in that an element (20, 30, 40) for carrying the drilling and injection devices may be moved, at right angles with respect to said seat for the frame being constructed, between two positions to bring first the drilling device (52, 52A) and then the adhesive injection device or devices (50, 50A) into the operating position; and in that on said element two said drilling devices (52, 52A) and two corresponding said injection devices (50, 50A) are disposed symmetrically about the plane bisecting the corner of the frame being constructed and capable of acting on the external sides of the two sections (P) next to the arms of the bracket (S).

2. Equipment according to claim 1, characterised in that there is provided on the said element (20, 30) a system of guides (38) orthogonal to the bisecting plane to move symmetrically in and out two sliding supports (40, 40A), each of which carries a drilling device (52, 52A) and an injection device (50, 50A).

3. Equipment according to claim 2, characterised in that the said system of guides (38) is carried in turn by a sliding block (30) which is movable on the said element (20) to approach and move away from the location for the components to be assembled.

## Patentansprüche

1. Ausrüstung für das Verbinden von an einer Ecke konvergierenden Profilen mit Hilfe eines innenliegenden Bügels zur Bildung von Metallrahmen und dergleichen mit Abfasungsvorrichtungen (7, 7A) - an einer im wesentlichen horizontalen Auflage für die zu befestigenden Teile des Rahmens - die in der Lage sind, eine Außenwand HI jedes Profils zur Anlage gegen einen entsprechenden Anschlag an dem Bügel zu verformen, mit mindestens einer Bohrvorrichtung (52, 52A) und mindestens einer Vorrichtung (50, 50A) zum Einspritzen eines flüssigen Klebemittels zur Sicherung der Befestigung zwischen dem Bügel und den Profilen, dadurch gekennzeichnet, daß ein die Bohr- und Einspritzvorrichtungen tragendes Element (20, 30, 40) rechtwinkelig mit Bezug auf genannte Auflage für den zu konstruierenden Rahmen zwischen zwei Positionen beweglich ist, um zunächst die Bohrvorrichtung (52, 52A) und dann die Vorrichtung oder die Vorrichtungen zur Einspritzung von Klebemittel (50, 50A) in die Betriebsstellung zu verbringen; und daß auf besagtem Element zwei besagte Bohrvorrichtungen (52, 52A) und zwei entsprechende besagte Einspritzvorrichtungen (50, 50A) symmetrisch um die Eckwinkelhalbierungsebene des in Konstruktion befindlichen Rahmens angeordnet und in der Lage sind, auf die äußeren Seiten der zwei Profile (P) neben den Armen des Bügels (S) zu wirken.

2. Ausrüstung gemäss Anspruch 1, dadurch gekennzeichnet, daß auf besagtem Element (20, 30) orthogonal zu der Halbierungsebene ein Führungssystem (38) vorgesehen ist, um zwei Gleitlagerungen (40, 40A) symmetrisch nach innen und außen zu bewegen, von denen jedes eine Bohrvorrichtung (52, 52A) und eine Einspritzvorrichtung (50, 50A) trägt.

3. Ausrüstung nach Anspruch 2, dadurch gekennzeichnet, daß besagtes Führungssystem (38) seinerseits auf einem Kulissenstein (30) gelagert ist, der auf besagtem Element (20) beweglich ist, um sich dem Lageort für die zu montierenden Teile zu nähern oder sich davon zu entfernen.

## Revendications

1. Equipement pour l'assemblage de sections convergeant à un angle à l'aide d'un support interne, pour la formation de cadres métalliques et analogues, comprenant , au niveau d'un appui sensiblement horizontal pour les pièces du cadre à fixer, des dispositifs de chanfreinage (7, 7A) aptes à déformer une paroi extérieure de chaque section pour appuyer contre une butée correspondante sur le support, au moins un dispositif de perçage (52, 52A) et au moins un dispositif (50, 50A) pour injecter une colle liquide apte à assurer la fixation entre le support et les sections, caractérisé : en ce qu'un élément (20, 30, 40) pour porter les dispositifs de perçage et d'injection peut être déplacé, perpendiculairement audit appui pour le cadre en cours de construction, entre deux positions pour mettre en position de fonctionnement d'abord le dispositif de perçage (52, 52A) puis le dispositif ou les dispositifs (50, 50A) d'injection de colle; et en ce que, sur ledit élément, lesdits deux dispositifs de perçage (52, 52A) et lesdits deux dispositifs d'injection correspondants (50, 50A) sont disposés de manière symétrique autour du plan divisant en deux parties égales l'angle du cadre en cours de construction et sont aptes à agir sur les faces extérieures des deux sections (P) prés des bras du support (S).

2. Equipement selon la revendication 1, caractérisé en ce que sur ledit élément (20, 30) est disposé un système de guides (38) perpendiculaires au plan de division d'angle pour faire entrer et sortir de manière symétrique deux supports coulissants (40, 40A) dont chacun porte un dispositif de perçage (52, 52A) et un dispositif d'injection (50, 50A).

3. Equipement selon la revendication 2, caractérisé en ce que ledit système de guides (38) est lui-même porté par un bloc coulissant (30) qui peut se déplacer sur ledit élément (20) pour s'approcher et s'éloigner de l'emplacement pour les pièces à assembler.
